# EUROPÄISCHE PATENTSCHRIFT

(11) **EP 3 019 920 B1**
(45) Veröffentlichungstag und Bekanntmachung des Hinweises auf die Patenterteilung: **30.03.2022**
(21) Anmeldenummer: 13737540.8
(22) Anmeldetag: 13.07.2013
(51) Int. Cl.: G05B 19/042

(54) **DATENERFASSUNGSEINHEIT UND AUTOMATISIERUNGSSYSTEM**
DATA-CAPTURE UNIT AND AUTOMATION SYSTEM
UNITÉ DE DÉTECTION DE DONNÉES ET SYSTÈME D'AUTOMATISATION

(43) Veröffentlichungstag der Anmeldung: 18.05.2016
(73) Patentinhaber: Festo SE & Co. KG, 73734 Esslingen (DE)
(72) Erfinder: GRÄFF, Uwe, 73760 Ostfildern (DE); HUFNAGL, Herbert, 73773 Aichwald (DE)
(74) Vertreter: Patentanwälte Magenbauer & Kollegen Partnerschaft mbB
(86) Internationale Anmeldenummer: PCT/EP2013/002086
(87) Internationale Veröffentlichungsnummer: WO 2015/007297

(56) Entgegenhaltungen:
- EP-A1- 2 538 609
- WO-A2-2008/039326
- DE-A1- 10 245 176
- DE-A1-102008 027 935
- DE-A1-102010 038 457
- US-A1- 2007 010 968

## Beschreibung

Die Erfindung betrifft eine Datenerfassungseinheit für ein Automatisierungssystem sowie ein Automatisierungssystem mit einer derartigen Datenerfassungseinheit.

Aus der DE 10 2011 080 569 A1 ist ein System zur Bedienung von Feldgeräten in einer Automatisierungsanlage bekannt, wobei eine übergeordnete Steuer-/Bedieneinheit über ein Kommunikationsnetzwerk auf Feldgeräte zugreift und wobei das Kommunikationsnetzwerk auf der Steuer-/Bedienebene ein erstes Bussystem mit einem ersten Übertragungsprotokoll und auf der Feldebene ein zweites Bussystem mit einem zweiten Übertragungsprotokoll aufweist, wobei die Umsetzung der beiden Übertragungsprotokolle in einem Gateway erfolgt. Dabei ist das Gateway mit einer Grundsoftware ausgerüstet, die bei Auftreten eines Ereignisses mittels eines Suchlaufs die auf der Feldebene angeordneten Feldgeräte ermittelt und die ermittelte Information über die Feldgeräte nutzt, um elektronische Gerätebeschreibungen von einem Applikations-Server, in dem Server Apps vorgehalten werden, herunterzuladen und der Steuer-/Bedieneinheit zur Bedienung der Feldgeräte zur Verfügung zu stellen.

Aus der internationalen Anmeldung WO 2008/039326 A1 ist ein System bekannt mit einer Überwachungseinheit, die konfiguriert ist, um im Bereich eines industriellen Prozesses montiert zu werden. Eine Schnittstelle koppelt an einen Prozessregelkreis und empfängt Daten, die von der Schnittstelle aus dem Prozessregelkreis empfangen werden. In einer Filtereinheit werden die empfangenen Daten von Speicher vorverarbeitet.

Die Aufgabe der Erfindung besteht darin, Informationen von und über Arbeitsbusteilnehmer des Automatisierungssystems in einem größeren Umfang für den Betrieb des Automatisierungssystems auszunutzen, als dies bisher der Fall ist.

Diese Aufgabe wird für eine Datenerfassungseinheit der eingangs genannten Art mit den Merkmalen des Anspruchs 1 gelöst.

Dabei kann die Datenerfassungseinheit entweder als separates Gerät ausgebildet sein, das zwischen die Feldeinheit und einen der Arbeitsbusteilnehmer geschaltet wird, oder als Bestandteil der Feldeinheit oder eines Arbeitsbusteilnehmers ausgebildet sein. Der Feldeinheit kommt die Aufgabe zu, die Arbeitsbusteilnehmer mit Steuerbefehlen anzusteuern, die zumindest teilweise über ein übergeordnetes Bussystem von einer übergeordneten Steuerungseinrichtung, insbesondere einer speicherprogrammierbaren Steuerung, bereitgestellt werden. Hierbei ist die Feldeinheit dazu ausgebildet, die Buskommunikation mit der übergeordneten Steuerungseinrichtung, die über ein erstes Bussystem gemäß einem vorgegebenen, ersten Buskommunikationsprotokoll erfolgt, in ein standardisiertes oder in ein proprietäres Arbeitsbusprotokoll umzusetzen, mit dem die Arbeitsbusteilnehmer angesprochen werden können.

Die Aufgabe der Datenerfassungseinheit besteht darin, an einer geeigneten Stelle im Arbeitsbus die gemäß dem für den Arbeitsbus geltenden zweiten Buskommunikationsprotokoll übertragenen Steuerbefehle von der Feldeinheit sowie ebenfalls nach dem zweiten Buskommunikationsprotokoll codierte Daten von den Arbeitsbusteilnehmern zu erfassen, zu verarbeiten und zu speichern. Dabei können zumindest einige der Arbeitsbusteilnehmer derart konfiguriert sein, dass sie Daten wie Messwerte von angeschlossenen Sensoren, Bewegungszustände von Aktoren oder Schaltzustände von Fluidventilen intern verarbeiten und nur dann über den Arbeitsbus weiterleiten, wenn eine entsprechende Abfrage von der Feldeinheit erfolgt oder ein ungewöhnlicher Zustand eingetreten ist. Andere der Arbeitsbusteilnehmer können dazu eingerichtet sein, ihre Daten vollständig auf den Arbeitsbus einzukoppeln, um eine Verarbeitung dieser Daten in der Feldeinheit zu ermöglichen. Nur ein Bruchteil der an der Feldeinheit eintreffenden Daten wird an die übergeordnete Steuerungseinrichtung weitergeleitet, da das erste Bussystem nur ein geringes Datenvolumen pro Zeiteinheit übertragen kann und somit nur wichtige Statusmeldungen von einzelnen Feldeinheiten oder Arbeitsbusteilnehmern an die übergeordnete Steuerungseinrichtung übertragen werden. Bei einem bekannten Automatisierungssystem werden die Daten der Arbeitsbusteilnehmer an die Feldeinheit übertragen, dort auf das Vorliegen von wichtigen Informationen hin überprüft und nur bei einer Bewertung als wichtige Information in das erste Buskommunikationsprotokoll codiert und an die übergeordnete Steuerungseinrichtung weitergeleitet. Andernfalls werden die Daten verworfen und stehen somit nicht mehr für weitere Betrachtungen zur Verfügung.

Demgegenüber können mit der erfindungsgemäßen Datenerfassungseinheit, die der Feldeinheit im Arbeitsbus vorgelagert ist, einige oder alle Daten, die von den Arbeitsbusteilnehmern bereitgestellt werden, verarbeitet und zumindest zwischengespeichert oder gegebenenfalls auch endgültig gespeichert werden. In gleicher Weise gilt dies auch für die Ergebnisse der Verarbeitung von Daten der Arbeitsbusteilnehmer. Somit gehen die ermittelten Daten der einzelnen Arbeitsbusteilnehmer nicht verloren und können für zusätzliche Zwecke genutzt werden.

Bei der Verarbeitungseinheit handelt es sich vorzugsweise um einen Mikrocontroller oder Mikroprozessor, der für die Verarbeitung großer Datenmengen ausgebildet ist und der mit der Speichereinrichtung, bei der es sich beispielsweise um einen Festkörperspeicher handeln kann, verbunden ist, um einen Datenaustausch zwischen Verarbeitungseinheit und Speichereinrichtung zu ermöglichen.

Zweckmäßig ist es, wenn die Verarbeitungseinrichtung zumindest teilweise frei programmierbar ausgebildet ist, um eine anwenderspezifische Verarbeitung von Steuerbefehlen und/oder Daten zu ermöglichen. Somit besteht für den Hersteller der Datenerfassungseinheit und/oder für den Benutzer die Möglichkeit, unterschiedliche Programme in der Verarbeitungseinrichtung ablaufen zu lassen, um beispielsweise eine auf die speziellen Bedürfnisse des Benutzers zugeschnittene Verarbeitung der Daten der Arbeitsbusteilnehmer zu ermöglichen.

Bei einer vorteilhaften Weiterbildung der Erfindung ist vorgesehen, dass der Verarbeitungseinrichtung eine, insbesondere als Computerschnittstelle ausgebildete, Datenschnittstelle für eine Kommunikation mit einer externen Datenbank zugeordnet ist, um eine Übertragung von Verarbeitungsergebnissen an die Datenbank und/oder eine Übertragung von Datenbankinhalten an die Verarbeitungseinrichtung zu ermöglichen. Mit Hilfe der Datenschnittstelle können Daten der Arbeitsbusteilnehmer und/oder Verarbeitungsergebnisse an die externe Datenbank übertragen werden. Ergänzend oder alternativ kann vorgesehen sein, Datenbankinhalte von der externen Datenbank an die Verarbeitungseinrichtung übertragen. Vorzugsweise ist die Datenschnittstelle gemäß einem Schnittstellenstandard ausgebildet, wie er aus dem Bereich der Personalcomputer (PCs) oder moderner mobiler Endgeräte wie Tablettcomputer (Tablet-PCs) oder Multifunktionstelefone (Smartphones) bekannt ist. Dabei kann die Datenschnittstelle für eine kabelgebundene und/oder kabellose Datenübertragung ausgebildet sein, beispielsweise als USB-Schnittstelle, als Bluetooth-Schnittstelle, als LAN- oder WLAN-Schnittstelle. Jedenfalls ermöglicht die Datenschnittstelle dem Benutzer einen einfachen und direkten Zugriff auf die Datenerfassungseinheit mit handelsüblichen Computermitteln, wie sie vorstehend genannt wurden, ohne dass hierzu auf den Computermitteln eine spezifische Anpassung an die Datenerfassungseinheit vorgenommen werden muss.

Bevorzugt ist vorgesehen, dass die Kommunikationsschnittstelle für eine bidirektionale Kommunikation mit den Arbeitsbusteilnehmern ausgebildet ist, um eine Übertragung von Verarbeitungsergebnissen und/oder von Speicherinhalten der Speichereinrichtung und/oder von Arbeitsbusteilnehmerdaten, die von einer externen Datenquelle bereitstellbar sind, an die Arbeitsbusteilnehmer zu gewährleisten. Hierdurch ist es möglich, Informationen von der Datenerfassungseinheit über den Arbeitsbus an die Arbeitsbusteilnehmer zu übertragen. Somit kann beispielsweise vorgesehen werden, dass ein Benutzer über entsprechende Computermittel, die an der Datenschnittstelle der Datenerfassungseinheit angeschlossen werden, Einfluss auf die Arbeitsbusteilnehmer nehmen kann, ohne dass er hierzu exemplarisch den Weg über eine mit der Feldeinheit verbundene übergeordnete Steuereinrichtung, beispielsweise eine speicherprogrammierbare Steuerung (SPS) nehmen muss.

Vorteilhaft ist es, wenn die Verarbeitungseinrichtung und die Speichereinrichtung für eine Verarbeitung und Speicherung von Daten von Arbeitsbusteilnehmern aus der Gruppe: Identifikationsdaten, Betriebsdauerdaten, Parameter, Zustandsdaten, Sensordaten, Energieverbrauchsdaten, Fehlerdaten, Programmstanddaten, Benutzerinformationen, ausgebildet sind. Bei den Identifikationsdaten handelt es sich insbesondere um eine vom Hersteller des Arbeitsbusteilnehmers individuell und einmalig vergebene Folge von Buchstaben und Zahlen, mit der der Arbeitsbusteilnehmer eindeutig identifiziert werden kann. Die Betriebsdauerdaten können Informationen wie ein Datum einer erstmaligen Inbetriebnahme des Arbeitsbusteilnehmers, eine tatsächliche Nutzungsdauer des Arbeitsbusteilnehmers, eine Anzahl von Schaltspielen, eine maximale Nutzungsdauer für geeichte Arbeitsbusteilnehmer oder Ähnliches umfassen. Bei den Parametern kann es sich beispielsweise um benutzerdefinierte Einstellungen handeln, die wahlweise am jeweiligen Arbeitsbusteilnehmer direkt eingestellt werden und/oder über den Arbeitsbus ausgehend von der übergeordneten Steuerungseinrichtung oder die mit der Datenerfassungseinheit verbindbaren Computermittel vorgegeben werden. Als Zustandsdaten können beispielsweise Informationen über einen Schaltzustand eines elektrisch oder elektromagnetisch angetriebenen Ventils oder über eine Versorgung eines elektrischen Antriebs mit Energie vorgesehen werden. Bei den Sensordaten handelt es sich um Messwerte, insbesondere digital codierte Messwerte, die von Sensoren bereitgestellt werden, die an zumindest einem Arbeitsbusteilnehmer anschließbar sind und die über den Arbeitsbus zumindest bis zur Datenerfassungseinheit und gegebenenfalls auch bis zur Feldeinheit übertragen werden. Energieverbrauchsdaten geben Auskunft über einen aktuellen und/oder einen kumulierten Energieverbrauch des Arbeitsbusteilnehmers oder zumindest eines am Arbeitsbusteilnehmer angeschlossenen Energieverbrauchers wie beispielsweise einem Aktor. Sofern der Arbeitsbusteilnehmer oder ein am Arbeitsbusteilnehmer angeschlossenes Gerät wie ein Sensor oder Aktor mit einer Eigendiagnosefunktion ausgestattet ist bzw. sind, können Fehlermeldungen über den Arbeitsbus an die Feldeinheit übertragen werden und dabei auch in der Datenerfassungseinheit wahlweise vorläufig oder endgültig gespeichert werden. Viele Arbeitsbusteilnehmer und auch zumindest ein Teil der an die Arbeitsbusteilnehmer anschließbaren Geräte weisen eigene Mittel zur Datenverarbeitung, insbesondere Mikrocontroller oder Mikroprozessoren, auf. Diese Mittel zur Datenverarbeitung benötigen zur Abarbeitung der von ihnen verlangten Funktionen eine Programmierung, die in den meisten Fällen veränderlich ist und auch als Firmware bezeichnet wird. Beispielsweise können die Arbeitsbusteilnehmer und/oder Geräte vor der Auslieferung mit einer bestimmten Programmierung versehen worden sein, die jedoch über die Zeit veraltet oder Fehler aufweist und somit gegebenenfalls ersetzt werden muss. Hierbei ist es vorteilhaft, wenn diese Programmierung Informationen über einen Programmstand, insbesondere eine Versionsnummer oder einen Revisionsstand, umfasst. Anhand dieser Programmstandsdaten kann die Datenerfassungseinheit feststellen, ob der jeweilige Arbeitsbusteilnehmer bzw. das Gerät mit einem aktuellen Programmstand ausgerüstet ist oder die Programmierung möglicherweise aktualisiert werden muss. Ferner können in der Datenerfassungseinheit auch Benutzerinformationen wie beispielsweise Datenblätter oder Betriebsanleitungen für die Arbeitsbusteilnehmer oder daran angeschlossene Geräte gespeichert werden. Vorzugsweise dient die Verarbeitung und Speicherung der Daten dazu, weitergehende Informationen und/oder Muster aus diesen Daten abzuleiten und für den Benutzer zugänglich zu machen.

Erfindungsgemäß ist vorgesehen, dass die Verarbeitungseinrichtung und die Speichereinrichtung für einen Zugriff auf Programmdaten von Arbeitsbusteilnehmern über den Arbeitsbus ausgebildet sind, um eine Veränderung der Programmdaten in den Arbeitsbusteilnehmern zu bewirken. Somit dient die Datenerfassungseinheit dazu, den Programmstand der Arbeitsbusteilnehmer aktuell zu halten, ohne dass hierzu eine Ausbau der Arbeitsbusteilnehmer oder ein aufwändiges Ansprechen der Arbeitsbusteilnehmer über die übergeordnete Steuerungseinrichtung notwendig wäre.

Zweckmäßig ist es, wenn die Verarbeitungseinrichtung und die Speichereinrichtung für einen eigenständigen, drahtgebundenen oder drahtlosen, Zugriff auf externe Datenbanken ausgebildet sind, um anhand der Daten, insbesondere der Identifikationsdaten, der Arbeitsbusteilnehmer aktuelle Informationen zu den Arbeitsbusteilnehmern zu ermitteln und für die weitere Verwendung zu speichern und/oder an die Arbeitsbusteilnehmer zu übertragen. Hierzu kann vorgesehen sein, dass die Datenerfassungseinheit über die Datenschnittstelle oder durch zusätzliche Kommunikationsmittel wie beispielsweise ein WLAN-Modul oder ein Mobiltelefon-Modul drahtgebunden oder drahtlos Kontakt mit, vorzugsweise im Internet verfügbaren, Datenbanken aufnimmt und anhand der Daten, insbesondere der Identifikationsdaten, der Arbeitsbusteilnehmer aktuelle Informationen zu den Arbeitsbusteilnehmern ermitteln kann. Bei diesen Informationen handelt es sich beispielsweise um aktualisierte Programmdaten oder um aktualisierte Parametersätze für die Arbeitsbusteilnehmer oder daran angeschlossene Geräte.

Vorteilhaft ist es, wenn die Verarbeitungseinrichtung und die Speichereinrichtung dazu ausgebildet sind, anhand von Identifikationsdaten und Programmstandsdaten der am Arbeitsbus angeschlossenen Arbeitsbusteilnehmer eine Programmstandstabelle für die am Arbeitsbus angeschlossenen Arbeitsbusteilnehmer zu erstellen, um eine Vorausschau über eine Funktionsfähigkeit der Arbeitsbusteilnehmer vor einer Durchführung von Programmaktualisierungen einzelner oder aller Arbeitsbusteilnehmer und/oder eine Rückführung einzelner oder aller Arbeitsbusteilnehmer auf einen vorhergehenden Programmstand zu ermöglichen. Mit Hilfe einer derartigen Programmstandstabelle kann eine Voraussage darüber getroffen werden, ob die am Arbeitsbus angeschlossenen Arbeitsbusteilnehmer sowie gegebenenfalls an den Arbeitsbusteilnehmern angeschlossene Geräte wie beispielsweise Sensoren oder Aktoren, fehlerfrei zusammenarbeiten können oder ob aufgrund von unterschiedlichen Programmständen für die einzelnen Arbeitsbusteilnehmer oder Geräte möglicherweise bekannte Fehlfunktionen auftreten. Die Programmstandstabelle kann auch dazu genutzt werden, bevorstehende Aktualisierungen von Programmständen einzelner oder aller Arbeitsbusteilnehmer und/oder daran angeschlossener Geräte auf zu erwartende Fehlfunktionen hin zu untersuchen. Vorzugsweise ist die Datenerfassungseinheit dazu eingerichtet, Programmstände der Arbeitsbusteilnehmer zumindest zeitweilig zu archivieren, um beispielsweise nach Durchführung einer Aktualisierung von Programmständen und der Detektion von Fehlfunktionen eine Rückführung einzelner oder aller Arbeitsbusteilnehmer auf einen vorherigen Programmstand vorzunehmen und damit die Funktion dieser Arbeitsbusteilnehmer wiederherzustellen.

Bevorzugt ist vorgesehen, dass die Verarbeitungseinrichtung und die Speichereinrichtung dazu ausgebildet sind, die Daten mehrerer Arbeitsbusteilnehmer zu einem Datensatz eines virtuellen Arbeitsbusteilnehmers zu verarbeiten und den Datensatz über den Arbeitsbus, insbesondere an die Feldeinheit, auszugeben. Mit Hilfe dieser Funktion können auch komplexe Vorgänge an oder in der Vorrichtung, die mit den Arbeitsbusteilnehmern ausgestattet ist, in einem einzigen Sensorsignal zusammengefasst werden. Ergänzend oder alternativ können die Daten mehrerer Arbeitsbusteilnehmer in ein neuronales Netzwerk eingespeist werden, um daraus Datensätze zu gewinnen, die nur in einem mittelbaren Zusammenhang mit den von den realen Arbeitsbusteilnehmern ermittelten Daten stehen. In jedem Fall kann durch die Verarbeitung von Daten mehrerer Arbeitsbusteilnehmer zu einem gemeinsamen Datensatz eine Reduktion der Datenmenge, die über den Arbeitsbus übertragen werden muss, erreicht werden, ohne dass hierbei zwingend ein Informationsverlust eintritt.

Ergänzend oder alternativ ist erfindungsgemäß vorgesehen, dass die Verarbeitungseinrichtung und die Speichereinrichtung dazu ausgebildet sind, Benutzereinstellungen für einen oder mehrere Arbeitsbusteilnehmer zu speichern und bei Bedarf, insbesondere nach einem Austausch eines Arbeitsbusteilnehmers, über den Arbeitsbus an den jeweiligen Arbeitsbusteilnehmer zur Verfügung zu stellen. Hierdurch wird erreicht, dass Arbeitsbusteilnehmer ausgetauscht werden können, ohne dass hierbei die Notwendigkeit besteht, den oder die neu eingesetzten Arbeitsbusteilnehmer aufwändig, insbesondere über ein am Arbeitsbusteilnehmer vorgesehenes Eingabemittel oder über die übergeordnete Steuerungseinrichtung, einstellen oder parametrieren zu müssen. Vielmehr ist die Datenerfassungseinheit dazu ausgebildet, die am bislang genutzten Arbeitsbusteilnehmer vorgenommenen Einstellungen von diesem abzurufen und zwischenzuspeichern und bei Austausch dieses Arbeitsbusteilnehmers die gespeicherten Einstellungen an den neu eingesetzten Arbeitsbusteilnehmer zu übertragen. Damit wird dem Wunsch Rechnung getragen, eine möglichst hohe Verfügbarkeit der Arbeitsbusteilnehmer bei hohem Bedienungskomfort zu gewährleisten.

In weiterer Ausgestaltung der Erfindung ist vorgesehen, dass der Verarbeitungseinrichtung eine Zeituhr, insbesondere eine Funkuhr, zugeordnet ist, um eintreffende Daten in der Verarbeitungseinrichtung mit Zeitstempeln zu versehen und die Daten und/oder daraus ermittelte Verarbeitungsergebnisse mit den Zeitstempeln in der Speichereinrichtung zu speichern. Mit Hilfe der Zeituhr können Daten, die in der Datenerfassungseinheit eintreffen, chronologisch korrekt abgespeichert werden und zu einem späteren Zeitpunkt für Auswertungszwecke herangezogen werden. Dadurch lassen sich auch Daten unterschiedlicher Arbeitsbusteilnehmer, die zu unterschiedlichen Zeitpunkten und/oder mit unterschiedlicher Frequenz in der Datenerfassungseinheit eintreffen, in eine auch zeitlich korrekte Beziehung zueinander bringen.

Vorteilhaft ist es, wenn die Verarbeitungseinrichtung und die Speichereinrichtung dazu ausgebildet sind, Auswertungen von eintreffenden und gespeicherten Daten zu Diagnosezwecken und/oder Dokumentationszwecken, insbesondere mittels eines neuronalen Netzwerks, vorzunehmen. Damit können die am Arbeitsbus angeschlossenen Arbeitsbusteilnehmer und gegebenenfalls auch die daran angeschlossene Geräte in vorteilhafter Weise auf mögliche Fehlfunktionen und/oder zeitliche Veränderungen überwacht werden. Dies kann beispielsweise durch Abgleich von älteren und jüngeren Daten, die von einem jeweils zu untersuchenden Arbeitsbusteilnehmer an die Datenerfassungseinheit bereitgestellt wurden, erfolgen. Sofern es sich bei einem der Arbeitsbusteilnehmer um einen Apparat mit vorgegebenen Wartungsintervallen und/oder bekannter Lebensdauer handelt, kann anhand der Auswertung von Daten des jeweiligen Arbeitsbusteilnehmers, beispielsweise anhand einer Einschaltdauer und/oder eine Anzahl von Lastspielen ermittelt werden, wann eine Wartung stattfinden soll oder wann ein Austausch des Arbeitsbusteilnehmers kurz vor Erreichen der Lebensdauer vorgenommen werden soll. Ergänzend oder alternativ kann durch die Auswertung der gespeicherten Daten auch eine Funktionsweise des Arbeitsbusteilnehmers und/oder der daran angeschlossenen Geräte wie beispielsweise Sensoren und/oder Aktoren dokumentiert werden, was gerade bei komplexen technischen Einrichtungen, die mit derartigen Arbeitsbusteilnehmern versehen sind, eine Vereinfachung bei einer Dokumentation des von dieser technischen Einrichtung durchgeführten Prozesses, insbesondere eines Produktions- oder Bearbeitungsprozesse, bedeuten kann.

Bei einer vorteilhaften Weiterbildung der Erfindung ist vorgesehen, dass die Verarbeitungseinrichtung und die Speichereinrichtung dazu ausgebildet sind, über den Arbeitsbus einzelne Arbeitsbusteilnehmer in einen Ruhezustand zu versetzen oder abzuschalten, um hiermit einen vorgebbaren, insbesondere zeitlich veränderlichen, Energieverbrauch der am Arbeitsbus angeschlossenen Arbeitsbusteilnehmer, zu gewährleisten. Beispielsweise sind in der Verarbeitungseinrichtung unterschiedliche Energieverbrauchsmuster für die am Arbeitsbus angeschlossenen Arbeitsbusteilnehmer hinterlegt, die durch einen Steuerbefehl von der Feldeinheit oder durch eigenständiges Agieren der Datenerfassungseinheit auf die Arbeitsbusteilnehmer angewendet werden können. Hierbei kann insbesondere vorgesehen sein, dass bestimmte Arbeitsbusteilnehmer in vorgegebenen Zeitabschnitten in einen Ruhezustand versetzt werden, um eine Einsparung von Energie für die Gesamtheit der Arbeitsbusteilnehmer zu erzielen. Während dieser Zeitabschnitte kann zusätzlich vorgesehen sein, Daten noch aktiver Arbeitsbusteilnehmer in der Datenerfassungseinheit derart zu verarbeiten, dass hieraus plausible Informationen über den Zustand der mit dem Arbeitsbusteilnehmer ausgerüstet technischen Einrichtung hergeleitet werden können, die ansonsten von dem außerhalb des jeweiligen Zeitabschnitts aktiven Arbeitsbusteilnehmern bereitgestellt werden. Hierdurch kann beispielsweise in Phasen verringerter Aktivität der technischen Einrichtung eine Energieeinsparung erzielt werden, ohne dass vollständig auf Zustandsinformationen über die technische Einrichtung verzichtet werden müsste.

Zweckmäßig ist es, wenn die Verarbeitungseinrichtung und die Speichereinrichtung dazu ausgebildet sind, an der Kommunikationsschnittstelle in variabler Weise Datenpakte bereitzustellen, die auf den Daten und/oder Verarbeitungsergebnissen basieren und die für eine Übertragung an eine übergeordnete Steuerungseinrichtung über den Arbeitsbus ausgebildet sind. Dadurch verhält sich die Datenerfassungseinrichtung gegenüber der übergeordneten Steuerungseinrichtung vorzugsweise wie ein Arbeitsbusteilnehmer, beispielsweise wie ein mit einem oder mehreren Sensoren ausgestatteter und/oder verbundener Arbeitsbusteilnehmer. Vorzugsweise ist der Datenerfassungseinrichtung eine feste oder vorgebbare Identifikation zugeordnet, die entsprechend den Identifikationen der anderen am Arbeitsbus angeschlossenen Arbeitsbusteilnehmer ausgebildet ist und die eine unmittelbare Kommunikation zwischen der Feldeinheit und der Datenerfassungseinrichtung ermöglicht.

Eine vorteilhafte Ausführungsform der Erfindung ist in der Zeichnung dargestellt. Dabei zeigt:

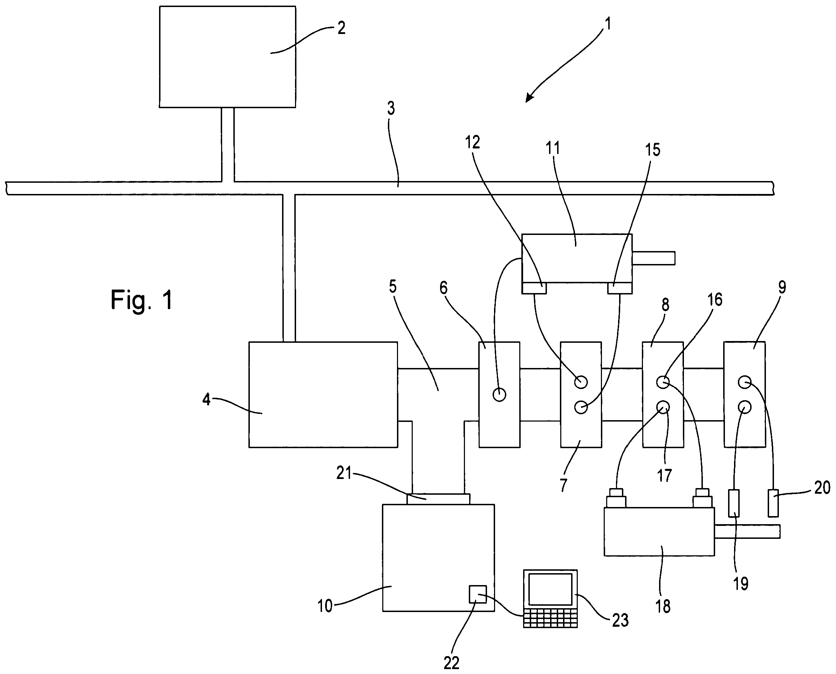

- Figur 1: eine schematische Darstellung eines Automatisierungssystems mit einer übergeordneten Steuerungseinrichtung und einer Feldeinheit, an deren Arbeitsbus mehrere Arbeitsbusteilnehmer angeschlossen sind.

Die einzige Figur stellt in schematischer Weise ein Automatisierungssystem 1 dar, wie es beispielsweise an einer Produktionsmaschine oder einer Werkzeugmaschine installiert sein kann. Exemplarisch umfasst das Automatisierungssystem 1 eine übergeordnete Steuerungseinrichtung 2, die beispielsweise als speicherprogrammierbare Steuerung ausgebildet sein kann. Ferner umfasst das Automatisierungssystem 1 einen mit der übergeordneten Steuerungseinrichtung 2 gekoppelten Feldbus 3 und eine ebenfalls mit dem Feldbus 3 gekoppelte Feldeinheit 4.

Eine Datenübertragung über den Feldbus 3 zwischen der übergeordneten Steuerungseinrichtung 2 und der Feldeinheit 4 erfolgt nach Maßgabe eines für den Feldbus 3 geltenden Kommunikationsprotokolls. Bei dem Feldbus 3 kann es sich beispielsweise um einen Datenbus nach den Konventionen von Profibus, CanOpen, Devicnet, IndustrialEthernet, Profinet, Ethercat oder Anderen handeln. Je nach ausgewähltem Bustyp können zwischen der Feldeinheit 4 und der Steuerungseinrichtung 2 aufgrund begrenzter Bandbreite nur geringe Datenvolumina und/oder nur Daten aus einem vorgegebenen Datensatz übertragen werden.

Die Feldeinheit 4, die zur Verbindung des Feldbusses 3 mit nachstehend näher beschriebenen, unterlagerten Endgeräten ausgebildet ist, umfasst einen nicht näher dargestellten Umsetzer, der auch als Gateway bezeichnet wird. Der Umsetzer ist für eine Umsetzung von Daten und Steuersignalen der übergeordneten Steuerungseinrichtung 2, die gemäß dem für den Feldbus 3 geltenden Kommunikationsprotokoll codiert sind, in ein Kommunikationsprotokoll eines internen Bussystems, das auch als Arbeitsbus 5 bezeichnet wird und gegebenenfalls auch für eine Umsetzung von Daten auch in umgekehrter Richtung ausgebildet.

Am Arbeitsbus 5 sind als Endgeräte mehrere Arbeitsbusteilnehmer 6, 7, 8 und 9 sowie eine Datenerfassungseinheit 10 angeschlossen. Exemplarisch weist der Arbeitsbus 5 eine deutlich größere Bandbreite für den Datentransport als der Feldbus 3 auf und ermöglicht neben der Übertragung der Steuersignale und Daten der übergeordneten Steuerungseinrichtung 2 an die Arbeitsbusteilnehmer 6, 7, 8 und 9 auch die Übertragung weiterer, nachstehend näher beschriebener Daten, die von den Arbeitsbusteilnehmern 6, 7, 8 und 9 bereitgestellt werden können.

Exemplarisch ist der Arbeitsbusteilnehmer 6 als Motorcontroller für einen elektrischen Stellantrieb 11 ausgebildet und über eine Kabelverbindung mit dem Stellantrieb 11 verbunden. Der Arbeitsbusteilnehmer 7 ist als Eingangsmodul ausgebildet und über Sensorkabel mit zwei am Stellantrieb 11 angeordneten Positionssensoren 12, 15 verbunden. Der Arbeitsbusteilnehmer 8 ist beispielhaft als Ventilanordnung mit zwei Arbeitsanschlüssen 16, 17 ausgebildet, die über Fluidleitungen mit einem Pneumatikzylinder 18 verbunden sind. Der Arbeitsbusteilnehmer 9 ist als Eingangsmodul ausgebildet und über Sensorkabel mit zwei benachbart zu einer Kolbenstange des Pneumatikzylinders 18 angeordneten Näherungsschaltern 19, 20 gekoppelt.

Während eines Betriebs des Automatisierungssystems 1 werden fortlaufend von den Positionssensoren 12, 15 und den Näherungsschaltern 19, 20 Signale an die jeweils angeschlossenen Arbeitsbusteilnehmer 7, 9 bereitgestellt. Vorzugsweise ist vorgesehen, dass diese Signale in den Arbeitsbusteilnehmern 7, 9 vorverarbeitet, insbesondere durch Analog-Digitalwandlung digitalisiert, werden und in das Buskommunikationsprotokoll des Arbeitsbusses 5 eingebunden und an den Arbeitsbus 5 weitergegeben werden. Ferner kann vorgesehen sein, dass interne Signale der Arbeitsbusteilnehmer 6 und 8, beispielsweise Status- und/oder Fehlermeldungen, ebenfalls in das Buskommunikationsprotokoll des Arbeitsbusses 5 eingebunden und an den Arbeitsbus 5 weitergegeben werden. Diese über den Arbeitsbus 5 übertragenen Daten werden dementsprechend auch an einer Kommunikationsschnittstelle 21 der Datenerfassungseinheit 10 bereitgestellt und können damit von der Datenerfassungseinheit 10 entgegengenommen und weiterverarbeitet werden.

Dazu umfasst die Datenerfassungseinheit 10 eine nicht dargestellte Verarbeitungseinrichtung sowie eine ebenfalls nicht dargestellte Speichereinrichtung. Die Arbeitseinrichtung ist vorzugsweise derart ausgebildet, dass sie einen erheblichen Teil, insbesondere sämtliche, der über den Arbeitsbus 5 übertragenen Daten erfassen, verarbeiten und an die Speichereinrichtung weiterleiten kann. Die Speichereinrichtung ist hinsichtlich ihrer Speichergeschwindigkeit und Speicherkapazität so ausgelegt, dass sie die auf dem Arbeitsbus 5 übertragenen Daten, die von der Verarbeitungseinrichtung verarbeitet werden, möglichst vollständig und über einen ausreichend langen Zeitraum speichern kann.

Exemplarisch ist die Datenerfassungseinheit 10 mit einer Datenschnittstelle 22 ausgerüstet, die elektrisch mit der Verarbeitungseinrichtung verbunden ist und die beispielsweise als Universal-Serial-Bus-Schnittstelle (USB-Schnittstelle) ausgebildet ist, um in einfacher Weise ein handelsübliches Computermittel wie beispielsweise einen tragbaren Computer oder ein Mobiltelefon anschließen zu können. Unabhängig von der Datenschnittstelle kann die Datenerfassungseinheit 10 eine weitere, nicht dargestellte Kommunikationsschnittelle aufweisen, die für eine unmittelbare Kommunikation der Datenerfassungseinheit mit einer nicht dargestellten Datenbank, beispielsweise auf einem drahtlos ansprechbaren Computer, ausgebildet ist. Über diese Kommunikationsschnittstelle kann die Datenerfassungseinheit 10 beispielsweise auch einen Zugang zum Internet öffnen, um dort hinterlegte Datenbanken anzusprechen.

Eine Funktionsweise der in das Automatisierungssystem 1 integrierten Datenerfassungseinheit 10 kann wie folgt beschrieben werden:
Bei einer erstmaligen Inbetriebnahme des Automatisierungssystems 1 werden zunächst die Identifikationsdaten der Arbeitsbusteilnehmer 6, 7, 8 und 9 von der Feldeinheit 4 ermittelt, um eine Kommunikation zwischen Feldeinheit 4 und den Arbeitsbusteilnehmern 6, 7, 8 und 9 zu ermöglichen. Da die Datenerfassungseinheit 10 in den Arbeitsbus 5 eingeschleift ist, kann sie wie die Feldeinheit 4 die bereitgestellten Identifikationsdaten der Arbeitsbusteilnehmer 6, 7, 8 und 9 erfassen und in der Speichereinrichtung speichern.

Sobald die Feldeinheit 4 die Identifikationsdaten der Arbeitsbusteilnehmer 6, 7, 8 und 9 ermittelt hat, kann es über den Feldbus 3 ein Freigabesignal an die übergeordnete Steuerungseinrichtung 2 weiterleiten, um mitzuteilen, dass nunmehr Steuerbefehle von der Steuerungseinrichtung 2 entgegengenommen werden und nach Verarbeitung in der Feldeinheit 4 an die Arbeitsbusteilnehmer 6, 7, 8 und 9 weitergeleitet werden können. Ferner kann die Feldeinheit 4 damit beginnen, Daten wie beispielsweise Signale der Positionssensoren 12, 15 und/oder der Näherungsschalter 19, 20 auszuwerten, um bei Eintreffen von Steuersignalen aus der Steuerungseinrichtung 2 beispielsweise einen geregelten oder gesteuerten Betrieb des Stellantriebs 11 und/oder des Pneumatikzylinders 18 aufzunehmen.

Die Datenerfassungseinheit 10 kann derart konfiguriert sein, dass sie mit Bereitstellung elektrischer Energie an die Arbeitsbusteilnehmer 6, 7, 8 und 9 damit beginnt, die über den Arbeitsbus 5 übermittelten Steuersignale und Daten zu empfangen, zu verarbeiten und zu speichern. Dabei kann vorgesehen sein, dass die eintreffenden Daten mit Zeitstempeln versehen werden, um eine chronologisch korrekte Verarbeitung und Speicherung zu ermöglichen. Ferner kann die Datenerfassungseinheit 10 dazu eingerichtet sein, zusammen mit den ermittelten Identifikationsdaten auch den Nutzungsbeginn für die im Automatisierungssystem 1 verwendeten Arbeitsbusteilnehmer 6, 7, 8 und 9 zu speichern.

In einem weiteren Schritt kann vorgesehen sein, dass die Datenerfassungseinheit 10 die Programmstände aus den Arbeitsbusteilnehmern 6, 7, 8 und 9 ausliest und in eine Programmstandstabelle speichert.

In einem weiteren Schritt kann vorgesehen sein, dass die Datenerfassungseinheit 10 anhand der ermittelten Programmstände, insbesondere unter Verwendung eines geeigneten Programms, Ermittlungen vornimmt, ob die Arbeitsbusteilnehmer 6, 7, 8 und 9 problemlos miteinander verwendet werden können und/oder gegebenenfalls Anpassungen an den Arbeitsbusteilnehmern 6, 7, 8 und 9 oder deren Programmierung erforderlich sind.

In einem weiteren Schritt kann vorgesehen sein, dass die Datenerfassungseinheit 10 an den Arbeitsbusteilnehmern 6, 7, 8 und 9 vorgenommene Benutzereinstellungen abfragt und speichert.

In einem weiteren Schritt kann vorgesehen sein, dass die Datenerfassungseinheit 10, insbesondere unter Zuhilfenahme eines Webservers, auf einem an die Datenschnittstelle 22 angeschlossenen Computer eine grafische Benutzeroberfläche bereitstellt, mit deren Hilfe ein Benutzer für die jeweiligen Arbeitsbusteilnehmer 6, 7, 8 und 9 Benutzereinstellungen vornehmen kann. Dies ist insbesondere dann von Bedeutung, wenn an den Arbeitsbusteilnehmern 6, 7, 8 und 9 keine Eingabemöglichkeiten für Benutzereinstellungen vorgesehen sind. Ergänzend oder alternativ kann die Datenerfassungseinheit 10 den angeschlossenen Computer dazu nutzen, Daten zu den Arbeitsbusteilnehmern 6, 7, 8 und 9 aus einer Datenbank abzurufen und an die Arbeitsbusteilnehmer 6, 7, 8 und 9 weiterzuleiten. Bei diesen Daten kann es sich beispielsweise um Parametrierdaten oder aktuelle Programme, insbesondere Firmware, für die Arbeitsbusteilnehmer 6, 7, 8 und 9 handeln. Dementsprechend ist es vorteilhaft, wenn die Datenerfassungseinheit 10 in der Lage ist, derartige Daten - gegebenenfalls nach Freigabe durch einen Benutzer - automatisch an die Arbeitsbusteilnehmer 6, 7, 8 und 9 weiterzuleiten und beispielsweise Aktualisierungen der Programmstände einzelner oder aller Arbeitsbusteilnehmer 6, 7, 8 und 9 selbsttätig vorzunehmen.

In einem weiteren Schritt kann vorgesehen sein, dass die Datenerfassungseinheit 10 vor einer Aktualisierung von Programmständen der Arbeitsbusteilnehmer 6, 7, 8 und 9 zunächst anhand einer bereits erstellten oder noch zu erstellenden Programmstandstabelle ermittelt, ob eine problemlose Funktion der Arbeitsbusteilnehmer 6, 7, 8 und 9 auch nach Durchführung der vorgesehenen Aktualisierung gewährleistet ist. Ferner kann in einem nachfolgenden Schritt vorgesehen werden, den jeweils vorherigen Programmstand aus den zu aktualisierenden Arbeitsbusteilnehmern 6, 7, 8 und 9 in der Datenerfassungseinheit 10 zu speichern.

In einem weiteren Schritt kann vorgesehen sein, dass die Datenerfassungseinheit 10 die über den Arbeitsbus 5 übertragenen Daten der Arbeitsbusteilnehmer 6, 7, 8 und 9 in einer Weise verarbeitet, die zu neuen Daten führt, die an die Feldeinheit 4 und von dort über den Feldbus 3 an die übergeordnete Steuerungseinrichtung 2 weitergeleitet werden können. Diese neuen Daten können insbesondere unter Zuhilfenahme eines neuronalen Netzwerks ermittelt werden, um beispielsweise auf Basis der von den Arbeitsbusteilnehmern 6, 7, 8 und 9 bereitgestellten Sensordaten einen oder mehrere Sensoren virtuell nachzubilden, die beispielsweise aus Kosten- und/oder Platzgründen nicht im Automatisierungssystem 1 Verwendung finden können.

In einem weiteren Schritt kann vorgesehen sein, dass die Datenerfassungseinheit 10 eine zeitbezogene, insbesondere chronologische Auswertung von Daten der Arbeitsbusteilnehmer 6, 7, 8 und 9 vornimmt, um beispielsweise wiederkehrende Muster in den gespeicherten Daten zu ermitteln oder Veränderungen von Sensordaten über der Zeit zu identifizieren, die beispielsweise in einem Zusammenhang mit einer Verschlechterung der Leistungsfähigkeit der jeweiligen Sensoren oder mit anderen Ursachen stehen. Vorzugsweise sind in der Datenerfassungseinheit 10 vorgegebene Grenzwerte hinterlegt, mit denen eine Einordnung der vorgenommenen Auswertungen erfolgen kann, um einem Benutzer, der beispielsweise über die Datenschnittstelle 22 auf die Datenerfassungseinheit 10 zugreift, Informationen darüber zu geben, ob die Arbeitsbusteilnehmer 6, 7, 8 und 9 noch korrekt arbeiten oder möglicherweise Fehlfunktionen aufweisen.

In einem weiteren Schritt kann vorgesehen sein, dass die Datenerfassungseinheit 10 anhand der Identifikationsdaten der Arbeitsbusteilnehmer 6, 7, 8 und 9 über die nicht dargestellte Kommunikationsschnittstelle, die beispielsweise als WLAN-Modem oder Mobilfunkschnittstelle ausgebildet sein kann, oder über einen an der Datenschnittstelle 22 angeschlossenen Computer auf eine, vorzugsweise internetbasierte, Datenbank zugreifen kann. Hier können beispielsweise Unterlagen zu den Arbeitsbusteilnehmern 6, 7, 8 und 9 wie Datenblätter oder Bedienungsanleitungen abgerufen werden, die anschließend in der Datenerfassungseinheit 10 gespeichert werden, um sie beispielsweise im Fehlerfall über die Datenschnittstelle 22 einem Benutzer direkt zugänglich zu machen, ohne dass dieser die entsprechenden Dokumente zunächst an anderer Stelle suchen muss.

In einem weiteren Schritt kann vorgesehen sein, dass die Datenerfassungseinheit 10 wahlweise nach Aufforderung durch die übergeordnete Steuerungseinrichtung 2 oder durch eine entsprechende Benutzereingabe über die Datenschnittstelle 22 oder kontinuierlich Maßnahmen vornimmt, um einen Energieverbrauch der angeschlossenen Arbeitsbusteilnehmer 6, 7, 8 und 9 auf einem niedrigen Niveau zu halten, sofern sich dies mit den Aufgaben, die durch die Arbeitsbusteilnehmer 6, 7, 8 und 9 wahrgenommen werden sollen, vereinbaren lässt. Hierbei kann vorgesehen werden, dass die Datenerfassungseinheit 10 Steuersignale der Feldeinheit 4, die an die Arbeitsbusteilnehmer 6, 7, 8 und 9 gerichtet sind, verzögert und/oder modifiziert, um beispielsweise eine verbesserte Koordination von Aktivitäten der einzelnen Arbeitsbusteilnehmer 6, 7, 8 und 9 zu ermöglichen.

## Patentansprüche

1. Datenerfassungseinheit (10) für ein Automatisierungssystem (1), mit wenigstens einer Kommunikationsschnittstelle (21), die zur Verbindung mit einem Arbeitsbus (5) ausgebildet ist und die für einen Empfang von Steuerbefehlen einer Feldeinheit (4) sowie von Daten von Arbeitsbusteilnehmern (6, 7, 8,9) eingerichtet ist, sowie mit einer Verarbeitungseinrichtung, die zur Verarbeitung der empfangenen Steuerbefehle und/oder Daten zu Verarbeitungsergebnissen ausgebildet ist, sowie mit einer Speichereinrichtung, die zur Speicherung von Verarbeitungsergebnissen ausgebildet ist, **dadurch gekennzeichnet, dass** die Verarbeitungseinrichtung und die Speichereinrichtung für einen Zugriff auf Programmdaten von Arbeitsbusteilnehmern (6, 7, 8, 9) über den Arbeitsbus (5) ausgebildet sind, um durch den Zugriff
eine Veränderung der Programmdaten in den Arbeitsbusteilnehmern (6, 7, 8, 9) zu bewirken und/oder dass die Verarbeitungseinrichtung und die Speichereinrichtung dazu ausgebildet sind, Benutzereinstellungen für einen oder mehrere Arbeitsbusteilnehmer (6, 7, 8, 9) zu speichern und bei Bedarf über den Arbeitsbus (5) dem jeweiligen Arbeitsbusteilnehmer (6, 7, 8, 9) zur Verfügung zu stellen.

2. Datenerfassungseinheit (10) nach Anspruch 1, **dadurch gekennzeichnet, dass** die Verarbeitungseinrichtung zumindest teilweise frei programmierbar ausgebildet ist, um eine anwenderspezifische Verarbeitung von Steuerbefehlen und/oder Daten zu ermöglichen.

3. Datenerfassungseinheit nach Anspruch 1 oder 2, **dadurch gekennzeichnet, dass** der Verarbeitungseinrichtung eine, insbesondere als Computerschnittstelle ausgebildete, Datenschnittstelle (22) für eine Kommunikation mit einer externen Datenbank zugeordnet ist, um eine Übertragung von Verarbeitungsergebnissen an die Datenbank und/oder eine Übertragung von Datenbankinhalten an die Verarbeitungseinrichtung zu ermöglichen.

4. Datenerfassungseinheit (10) nach Anspruch 1, 2 oder 3, **dadurch gekennzeichnet, dass** die Kommunikationsschnittstelle (21) für eine bidirektionale Kommunikation mit den Arbeitsbusteilnehmern (6, 7, 8, 9) ausgebildet ist, um eine Übertragung von Verarbeitungsergebnissen und/oder von Speicherinhalten der Speichereinrichtung und/oder von Arbeitsbusteilnehmerdaten, die von einer externen Datenquelle bereitstellbar sind, an die Arbeitsbusteilnehmer (6, 7, 8, 9) zu gewährleisten.

5. Datenerfassungseinheit (10) nach einem der vorhergehenden Ansprüche, **dadurch gekennzeichnet, dass** die Verarbeitungseinrichtung und die Speichereinrichtung für eine Verarbeitung und Speicherung von Daten von Arbeitsbusteilnehmern (6, 7, 8, 9) aus der Gruppe: Identifikationsdaten, Betriebsdauerdaten, Parameter, Zustandsdaten, Sensordaten, Energieverbrauchsdaten, Fehlerdaten, Programmstanddaten, Benutzerinformationen, ausgebildet sind.

6. Datenerfassungseinheit (10) nach einem der vorhergehenden Ansprüche, **dadurch gekennzeichnet, dass** die Verarbeitungseinrichtung und die Speichereinrichtung für einen eigenständigen, drahtgebundenen oder drahtlosen, Zugriff auf externe Datenbanken ausgebildet sind, um anhand der Daten, insbesondere der Identifikationsdaten, der Arbeitsbusteilnehmer (6, 7, 8, 9) aktuelle Informationen zu den Arbeitsbusteilnehmern (6, 7, 8, 9) zu ermitteln und für die weitere Verwendung zu speichern und/oder an die Arbeitsbusteilnehmer (6, 7, 8, 9) zu übertragen.

7. Datenerfassungseinheit (10) nach einem der vorhergehenden Ansprüche, **dadurch gekennzeichnet, dass** die Verarbeitungseinrichtung und die Speichereinrichtung dazu ausgebildet sind, anhand von Identifikationsdaten und Programmstandsdaten der am Arbeitsbus (5) angeschlossenen Arbeitsbusteilnehmer (6, 7, 8, 9) eine Programmstandstabelle für die am Arbeitsbus (5) angeschlossenen Arbeitsbusteilnehmer (6, 7, 8, 9) zu erstellen, um eine Vorausschau über eine Funktionsfähigkeit der Arbeitsbusteilnehmer (6, 7, 8, 9) vor einer Durchführung von Programmaktualisierungen einzelner oder aller Arbeitsbusteilnehmer (6, 7, 8, 9) und/oder eine Rückführung einzelner oder aller Arbeitsbusteilnehmer (6, 7, 8, 9) auf einen vorhergehenden Programmstand zu ermöglichen.

8. Datenerfassungseinheit (10) nach einem der vorhergehenden Ansprüche, **dadurch gekennzeichnet, dass** die Verarbeitungseinrichtung und die Speichereinrichtung dazu ausgebildet sind, die Daten mehrerer Arbeitsbusteilnehmer (6, 7, 8, 9) zu einem Datensatz eines virtuellen Arbeitsbusteilnehmers zu verarbeiten und den Datensatz über den Arbeitsbus (5), insbesondere an die Feldeinheit (4), auszugeben.

9. Datenerfassungseinheit (10) nach einem der vorhergehenden Ansprüche, **dadurch gekennzeichnet, dass** der Verarbeitungseinrichtung eine Zeituhr, insbesondere eine Funkuhr, zugeordnet ist, um eintreffende Daten in der Verarbeitungseinrichtung mit Zeitstempeln zu versehen und die Daten und/oder daraus ermittelte Verarbeitungsergebnisse mit den Zeitstempeln in der Speichereinrichtung zu speichern.

10. Datenerfassungseinheit (10) nach einem der vorhergehenden Ansprüche, **dadurch gekennzeichnet, dass** die Verarbeitungseinrichtung und die Speichereinrichtung dazu ausgebildet sind, Auswertungen von eintreffenden und gespeicherten Daten zu Diagnosezwecken und/oder Dokumentationszwecken, insbesondere mittels eines neuronalen Netzwerks, vorzunehmen.

11. Datenerfassungseinheit (10) nach einem der vorhergehenden Ansprüche, **dadurch gekennzeichnet, dass** die Verarbeitungseinrichtung und die Speichereinrichtung dazu ausgebildet sind, über den Arbeitsbus (5) einzelne Arbeitsbusteilnehmer (6, 7, 8, 9) in einen Ruhezustand zu versetzen oder abzuschalten, um hiermit einen vorgebbaren, insbesondere zeitlich veränderlichen, Energieverbrauch der am Arbeitsbus (5) angeschlossenen Arbeitsbusteilnehmer (6, 7, 8, 9), zu gewährleisten.

12. Datenerfassungseinheit (10) nach einem der vorhergehenden Ansprüche, **dadurch gekennzeichnet, dass** die Verarbeitungseinrichtung und die Speichereinrichtung dazu ausgebildet sind, an der Kommunikationsschnittstelle (21) in variabler Weise Datenpakte bereitzustellen, die auf den Daten und/oder Verarbeitungsergebnissen basieren und die für eine Übertragung an eine übergeordnete Steuerungseinrichtung (2) über den Arbeitsbus (5) ausgebildet sind.

## Claims

1. Data acquisition unit (10) for an automation system (1), with at least one communications interface (21) which is designed for connection to an operating bus (5) and is set up to receive control commands from a field unit (4) and data from operating bus participants (6, 7, 8, 9), with a processing device which is designed for the processing of the received control commands and/or data to processing results, and with a memory device designed for the storage of processing results, **characterised in that** the processing device and the memory device are designed for an access to program data of operating bus participants (6, 7, 8, 9) by means of the operating bus (5) in order to effect a change in program data by this access and/or **in that** the processing device and the memory device are designed to store user settings for one or more operating bus participants (6, 7, 8, 9) and to provide these user settings by means of the operating bus (5) to the respective operating bus participant (6, 7, 8, 9).

2. Data acquisition unit (10) according to claim 1, **characterised in that** the processing device is at least in part freely programmable, in order to facilitate user-specific processing of control commands and/or data.

3. Data acquisition unit (10) according to claim 1 or 2, **characterised in that** the processing device is assigned a data interface (22), in particular in the form of a computer interface, for communication with an external database, in order to facilitate the transfer of processing results to the database and/or a transfer of database content to the processing device.

4. Data acquisition unit (10) according to claim 1, 2 or 3, **characterised in that** the communications interface (21) is designed for bi-directional communication with the operating bus participants (6, 7, 8, 9), in order to ensure transfer of processing results and/or of memory content of the memory device and/or of operating bus participant data which may be provided from an external data source, to the operating bus participants (6, 7, 8, 9).

5. Data acquisition (10) unit according to any of the preceding claims, **characterised in that** the processing device and the memory device are designed for the processing and storage of operating bus participant (6, 7, 8, 9) data from the following group: identification data, operating time data, parameters, status data, sensor data, power consumption data, error data, program status data and user information.

6. Data acquisition unit (10) according to any of the preceding claims, **characterised in that** the processing device and the memory device are designed for independent wire-bound or wireless access to external databases to acquire based on the data, in particular based on the identification data of the operating bus participants (6, 7, 8, 9), up-to-date information concerning the operating bus participants (6, 7, 8, 9) which may then be stored for further use and/or transmitted to the operating bus participants (6, 7, 8, 9).

7. Data acquisition unit (10) according to any of the preceding claims, **characterised in that** the processing device and the memory device are designed, with the aid of identification data and program status data of the operating bus participants (6, 7, 8, 9) connected to the operating bus (5), to compile a program status table for the operating bus participants (6, 7, 8, 9) connected to the operating bus (5), in order to facilitate a preview of the operative readiness of the operating bus participants (6, 7, 8, 9) before implementation of program updating of individual or all operating bus participants (6, 7, 8, 9) and/or a return of individual or all operating bus participants (6, 7, 8, 9) to a previous program status.

8. Data acquisition unit (10) according to any of the preceding claims, **characterised in that** the processing device and the memory device are designed so as to process the data of several operating bus participants (6, 7, 8, 9) into a data set of a virtual operating bus participant and to output the data set via the operating bus (5), in particular to the field unit (4).

9. Data acquisition unit (10) according to any of the preceding claims, **characterised in that** the processing device is assigned a time clock, in particular a radio clock, in order to provide incoming data to the processing device with time stamps, and to store data and/or processing results derived from it with time stamps in the memory device.

10. Data acquisition unit (10) according to any of the preceding claims, **characterised in that** the processing device and the memory device are designed so as to make analyses of incoming and stored data for diagnostic and/or documentation purposes, in particular by means of a neuronal network.

11. Data acquisition unit (10) according to any of the preceding claims, **characterised in that** the processing device and the memory device are so designed that, via the operating bus (5), individual operating bus participants (6, 7, 8, 9) may be placed on standby or switched off, in order to ensure by this means a presettable power consumption of the operating bus participants (6, 7, 8, 9) connected to the operating bus (5), in particular variable over time.

12. Data acquisition unit (10) according to any of the preceding claims, **characterised in that** the processing device and the memory device to be so designed that they provide at the communications interface (21) in a variable manner data packets which are based on the data and/or processing results and which are designed for transfer via the operating bus (5) to a higher-level control unit (2).

## Revendications

1. Unité de détection de données (10) pour un système d'automatisation (1), avec au moins une interface de communication (21), qui est réalisée pour être reliée à un bus de travail (5) et qui est mise au point pour une réception d'instructions de commande d'une unité de champ (4) ainsi que de données d'abonnés de bus de travail (6, 7, 8, 9), ainsi qu'avec un dispositif de traitement, qui est réalisé pour traiter les instructions de commande et/ou les données reçues pour des résultats de traitement, ainsi qu'avec un dispositif de stockage, qui est réalisé pour le stockage de résultats de traitement, **caractérisée en ce que** le système de traitement et le système de stockage sont réalisés pour accéder aux données de programme d'abonnés de bus de travail (6, 7, 8, 9) par l'intermédiaire du bus de travail (5) pour entraîner du fait de l'accès une modification des données de programme dans les abonnés de bus de travail (6, 7, 8, 9), et/ou que le dispositif de traitement et le dispositif de stockage sont réalisés pour stocker des réglages d'utilisateur pour un ou plusieurs abonnés de bus de travail (6, 7, 8, 9) et pour les fournir si besoin par l'intermédiaire du bus de travail (5) à l'abonné de bus de travail (6, 7, 8, 9) concerné.

2. Unité de détection de données (10) selon la revendication 1, **caractérisée en ce que** le dispositif de traitement est réalisé au moins en partie de manière librement programmable pour permettre un traitement spécifique à l'utilisateur d'instructions de commande et/ou de données.

3. Unité de détection de données selon la revendication 1 ou 2, **caractérisée en ce qu'**une interface de données (22), réalisée en particulier en tant qu'interface d'ordinateur, est associée au dispositif de traitement pour une communication avec une base de données externe pour permettre une transmission de résultats de traitement à la base de données et/ou une transmission de contenus de base de données au dispositif de traitement.

4. Unité de détection de données (10) selon la revendication 1, 2 ou 3, **caractérisée en ce que** l'interface de communication (21) est réalisée pour une communication bidirectionnelle avec les abonnés de bus de travail (6, 7, 8, 9) pour garantir une transmission aux abonnés de bus de travail (6, 7, 8, 9) de résultats de traitement et/ou de contenus du dispositif de stockage et/ou de données d'abonnés de bus de travail, qui peuvent être fournis par une source de données externe.

5. Unité de détection de données (10) selon l'une quelconque des revendications précédentes, **caractérisée en ce que** le dispositif de traitement et le dispositif de stockage sont réalisés pour un traitement et stockage de données d'abonnés de bus de travail (6, 7, 8, 9) parmi le groupe : données d'identification, données de durées de fonctionnement, paramètres, données d'état, données de capteur, données de consommation d'énergie, données d'erreur, données de niveau de programme, informations d'utilisateurs.

6. Unité de détection de données (10) selon l'une quelconque des revendications précédentes, **caractérisée en ce que** le dispositif de traitement et le dispositif de stockage sont réalisés pour accéder de manière autonome, filaire ou sans fil à des bases de données externes pour déterminer, à l'aide des données, en particulier des données d'identification, des abonnés de bus de travail (6, 7, 8, 9), des informations instantanées sur les abonnés de bus de travail (6, 7, 8, 9) et pour les stocker pour l'utilisation ultérieure et/ou les transmettre aux abonnés de bus de travail (6, 7, 8, 9).

7. Unité de détection de données (10) selon l'une quelconque des revendications précédentes, **caractérisée en ce que** le dispositif de traitement et le dispositif de stockage sont réalisés pour créer, à l'aide de données d'identification et de données de niveau de programme des abonnés de bus de travail (6, 7, 8, 9) raccordés au bus de travail (5), un tableau de niveaux de programme pour les abonnés de bus de travail (6, 7, 8, 9) raccordés au bus de travail (5) pour permettre une perspective sur une fonctionnalité des abonnés de bus de travail (6, 7, 8, 9) avant une exécution de mises à jour de programme de divers ou de tous les abonnés de bus de travail (6, 7, 8, 9) et/ou un retour de divers ou de tous les abonnés de bus de travail (6, 7, 8, 9) sur un niveau de programme précédent.

8. Unité de détection de données (10) selon l'une quelconque des revendications précédentes, **caractérisée en ce que** le dispositif de traitement et le dispositif de stockage sont réalisés pour traiter les données de plusieurs abonnés de bus de travail (6, 7, 8, 9) en un jeu de données d'un abonné de bus de travail virtuel et pour envoyer en particulier à l'unité de champ (4) le jeu de données par l'intermédiaire du bus de travail (5).

9. Unité de détection de données (10) selon l'une quelconque des revendications précédentes, **caractérisée en ce qu'**une horloge, en particulier une horloge radio, est associée au dispositif de traitement pour doter des données entrantes dans le dispositif de traitement d'horodatages et pour stocker les données et/ou des résultats de traitement déterminés sur cette base avec les horodatages dans le dispositif de stockage.

10. Unité de détection de données (10) selon l'une quelconque des revendications précédentes, **caractérisée en ce que** le dispositif de traitement et le dispositif de stockage sont réalisés pour réaliser des évaluations de données entrantes et stockées à des fins de diagnostic et/ou à des fins de documentation, en particulier au moyen d'un réseau neuronal.

11. Unité de détection de données (10) selon l'une quelconque des revendications précédentes, **caractérisée en ce que** le dispositif de traitement et le dispositif de stockage sont réalisés pour placer par l'intermédiaire du bus de travail (5) divers abonnés de bus de travail (6, 7, 8, 9) dans un état de repos ou pour les désactiver pour garantir ce faisant une consommation d'énergie pouvant être prédéfinie, en particulier variable dans le temps des abonnés de bus de travail (6, 7, 8, 9) raccordés au bus de travail (5).

12. Unité de détection de données (10) selon l'une quelconque des revendications précédentes, **caractérisée en ce que** le dispositif de traitement et le dispositif de stockage sont réalisés pour fournir de manière variable à l'interface de communication (21) des paquets de données, qui se basent sur les données et/ou les résultats de traitement et qui sont réalisés pour une transmission à un dispositif de commande principal (2) par l'intermédiaire du bus de données (5).
